# EUROPÄISCHE PATENTSCHRIFT

(11) **EP 2 037 095 B1**
(45) Veröffentlichungstag und Bekanntmachung des Hinweises auf die Patenterteilung: **30.11.2011**
(21) Anmeldenummer: 08015892.6
(22) Anmeldetag: 10.09.2008
(51) Int. Cl.: F01P 3/20, B60K 6/48, F02F 7/00, F02B 63/04

(54) **Hybridantriebseinheit**
Hybrid drive unit
Unité d'entraînement hybride

(30) Priorität: 11.09.2007 DE 102007043017
(43) Veröffentlichungstag der Anmeldung: 18.03.2009
(73) Patentinhaber: Volkswagen Aktiengesellschaft, 38436 Wolfsburg (DE)
(72) Erfinder: Zillmer, Michael, 38173 Sickte (DE); Bohnstedt, Kai, 38116 Braunschweig (DE); Hladun, Marc, 38108 Braunschweig (DE); Zirwes, Marcel, 38114 Braunschweig (DE)

(56) Entgegenhaltungen:
- EP-A- 0 302 118
- WO-A-03/008782
- DE-A1- 4 323 602
- DE-A1- 19 618 865
- DE-A1- 19 840 660

## Beschreibung

Die vorliegende Erfindung betrifft eine Hybridantriebseinheit für ein Kraftfahrzeug mit einer Brennkraftmaschine mit einem Zylinderkurbelgehäuse, mindestens einer wahlweise motorisch oder generatorisch betreibbaren elektrischen Maschine, die an dem Zylinderkurbelgehäuse angeordnet ist, und einem Fluidkreislauf zum Durchleiten eines Fluids durch die elektrische Maschine.

Eine derartige Hybridantriebseinheit ist beispielsweise aus der DE 10 2005 047 653 A1 bekannt, bei der ein flüssiges Kühlmittel durch einen Niedertemperatur-Kühlkreis geführt wird, der einen Ladeluftkühler sowie die elektrische Maschine und/oder der elektrischen Maschine zugeordnete elektronische Bauteile einschließt.

Bei einem parallelem Hybridkonzept, d.h. der Kraftfahrzeugantrieb kann sowohl durch die Brennkraftmaschine als auch durch die elektrische Maschine bewirkt werden, sind beide Antriebsmaschinen nah beieinander und nah einem Getriebe angeordnet, wodurch nur ein begrenzter Bauraum für die Zuführungsleitungen des Kühlmittels zur Verfügung steht.

Aus der DE 43 23 602 A1 ist eine Antriebsanordnung für ein Hybridfahrzeug mit einer elektrischen Maschine nach Art eines Außenläufers bekannt, die einen Rotor mit einem Nabenkörper und einen Stator aufweist. Da die elektrische Maschine nach Art eines Außenläufers zwischen dem Zylinderkurbelgehäuse und dem Getriebe eingefügt ist und von der Kurbelwelle durchdrungen wird, ist eine Zuführung des Kühlmittels oder eines anderen Medium seitlich von außen aufgrund des sich drehenden Außenrotors nicht möglich. Eine Zuführung des Kühlmittels kann an dem Außenrotor vorbei nur in eine der Stirnflächen der elektrischen Maschine erfolgen, was aufgrund der angrenzenden Bauteile unweigerlich eine Triebstrangverlängerung zur Folge hat. Dies ist aber aus Gründen des begrenzten Motorraums nicht akzeptabel.

Im Dokument WO 03/008782 A1 wird ein Antrieb für ein Kraftfahrzeug mit einer Brennkraftmaschine mit einem Zylinderkurbelgehäuse beschrieben. Eine elektrische Maschine ist direkt am Zylinderkurbelgehäuse angeordnet. Es existieren von Kühlwasser durchflossene Ausnehmungen, welche mit einem Kanal im Zylinderkurbelgehäuse in fluidischer Verbindung stehen, zur Kühlung des Stators der elektrischen Maschine mittels des durchströmenden Kühlwassers.

Das Dokument DE 196 18 865 A1 betrifft eine Antriebsanordnung für ein Hybridfahrzeug, mit einer Brennkraftmaschine und einer elektrischen Maschine. Es existieren Kühlkanäle im Zylinderkurbelgehäuse und im Gehäuse der elektrischen Maschine, welche in fluidischer Verbindung miteinander stehen.

Vor diesem Hintergrund besteht die Aufgabe der vorliegenden Erfindung darin, bei einer Hybridantriebseinheit eine Fluidzuführung zu der elektrischen Maschine ohne Verlängerung des Triebstranges zu ermöglichen.

Diese Aufgabe wird durch eine Antriebseinheit mit den Merkmalen des Anspruchs 1 gelöst.

Bei einer Hybridantriebseinheit der eingangs beschriebenen Art ist erfindungsgemäß vorgesehen, dass in dem Zylinderkurbelgehäuse mindestens ein Kanal zum Durchleiten des Fluids vorgesehen ist, der einen ersten Übergabeanschluss in einem Bereich des Zylinderkurbelgehäuses, an dem die elektrische Maschine angeordnet ist, und einen zweiten Übergabeanschluss in einem von außerhalb zugänglichen Bereich des Zylinderkurbelgehäuses aufweist. Der Kern der Erfindung besteht darin, dass ein direkter Zugang zu der Stirnseite der elektrischen Maschine vorbei geschaffen wird, indem der eigentliche Fluidtransport nicht durch eine Zuleitung zwischen der elektrischen Maschine und dem Zylinderkurbelgehäuse, sondern durch den in dem Zylinderkurbelgehäuse untergebrachten Kanal stattfindet. Durch die Einleitung des Fluids in den in dem Zylinderkurbelgehäuse eingebrachten Kanal sowie die Durchführung und Weiterleitung an die elektrische Maschine ist deren Medienversorgung in einer kompakt aufgebauten Antriebseinheit gewährleistet.

Die Unteransprüche beschreiben bevorzugte Weiterbildungen oder Ausgestaltungen der Erfindung.

Bevorzugt ist die elektrische Maschine nach Art eines Außenläufers ausgebildet, die einen Rotor mit einem Nabenkörper und einen Stator aufweist.

Für eine verlustlose Fluidleitung ist zwischen dem Zylinderkurbelgehäuse und der elektrischen Maschine ein Dichtflansch angeordnet ist, der zumindest eine zusätzliche Bohrung aufweist, die in Übereinstimmung mit dem ersten Übergabeanschluss positioniert ist.

Bevorzugt ist in der mindestens einen zusätzlichen Bohrung ein Abdichtelement eingesetzt und der Dichtflansch bildet mit dem Abdichtelement eine vorgefertigte Baueinheit, wodurch die Montage der Antriebseinheit erleichtert wird.

In vorteilhafter Weise ist ein Kanal für ein Hydraulikfluid vorgesehen. Nachfolgend wird die Erfindung anhand der detaillierten Beschreibung einer Ausführungsform unter Bezug auf die beiliegenden Figuren beispielhaft näher erläutert, in denen:
- Figur 1: eine perspektivische Ansicht einer Brennkraftmaschine und einer daran angeordneten elektrischen Maschine zeigt;
- Figur 2: eine perspektivische Ansicht der Anordnung aus Figur 1 ohne der elektrischen Maschine zeigt;
- Figur 3: eine Vorderansicht der Anordnung aus Figur 2 zeigt;
- Figur 4: die Vorderansicht aus Figur 3 mit einem teilgeschnittenen Zylinderkurbelgehäuse zeigt;
- Figur 5: eine vergrößerte Teilschnittdarstellung der Anordnung aus Figur 1 von der Seite betrachtet zeigt;

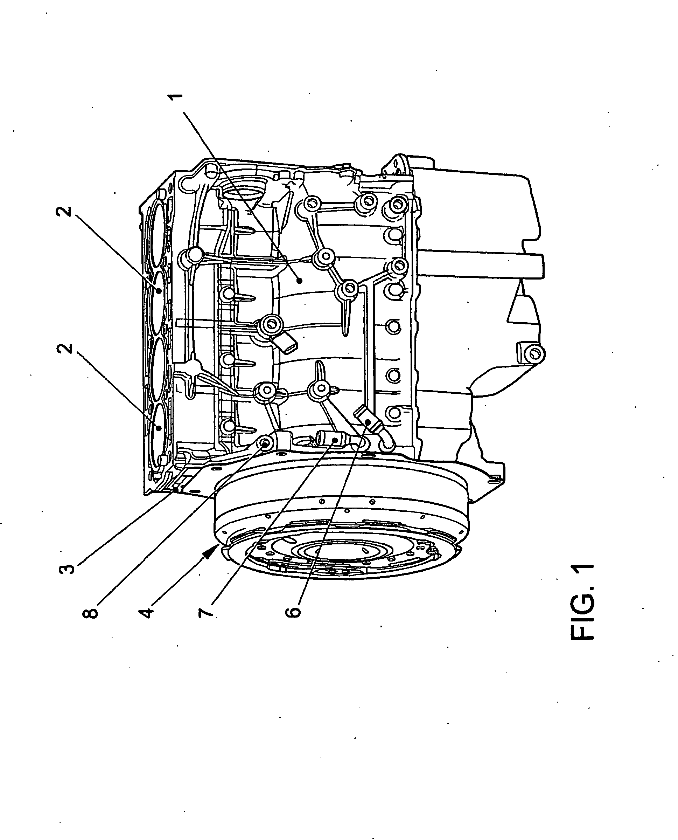

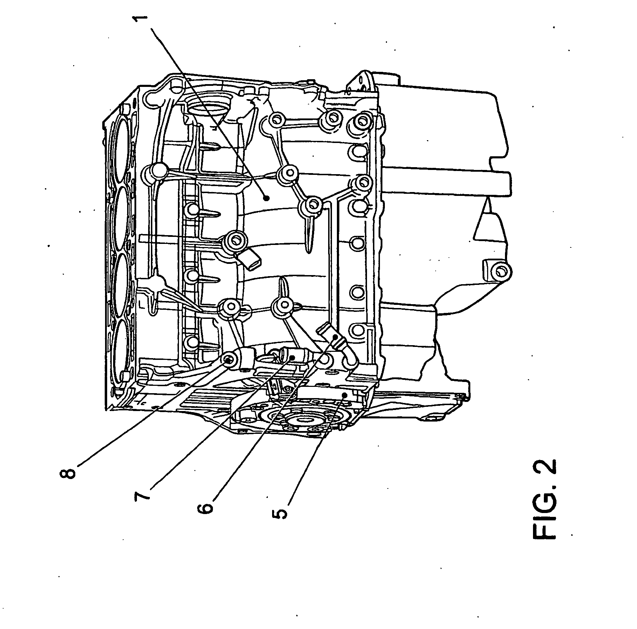

In der Figur 1 ist in einer perspektivischen Ansicht eine erfindungsgemäße Hybridantriebeinheit dargestellt. Die Hybridantriebseinheit weist eine Brennkraftmaschine mit einem Zylinderkurbelgehäuse 1 auf, das mit mehreren Zylinderbohrungen 2 versehen ist und die zur Unterbringung von Hubkolben und einer Kurbelwelle dient. An einer Stirnfläche 3 des Zylinderkurbelgehäuses 1 ist eine elektrische Maschine 4 des Außenläufer-Typs angeordnet, die mittels eines Dichtflansches 5 (Figur 2) an der Stirnfläche 3 des Zylinderkurbelgehäuses 1 montiert ist.

Zum Schutz des Dichtflansches 5 vor Verschmutzung und/oder mechanischer Beschädigung wird der Dichtflansch 5 mit von einem Gehäuse überdeckt bzw. umkapselt. An der dem Zylinderkurbelgehäuse 1 gegenüberliegenden Stirnseite der elektrischen Maschine 4 ist ein Getriebe (nicht dargestellt) vorgesehen, so dass die elektrische Maschine 4 an der Kurbelwelle zwischen der Brennkraftmaschine und dem Getriebe positioniert ist.

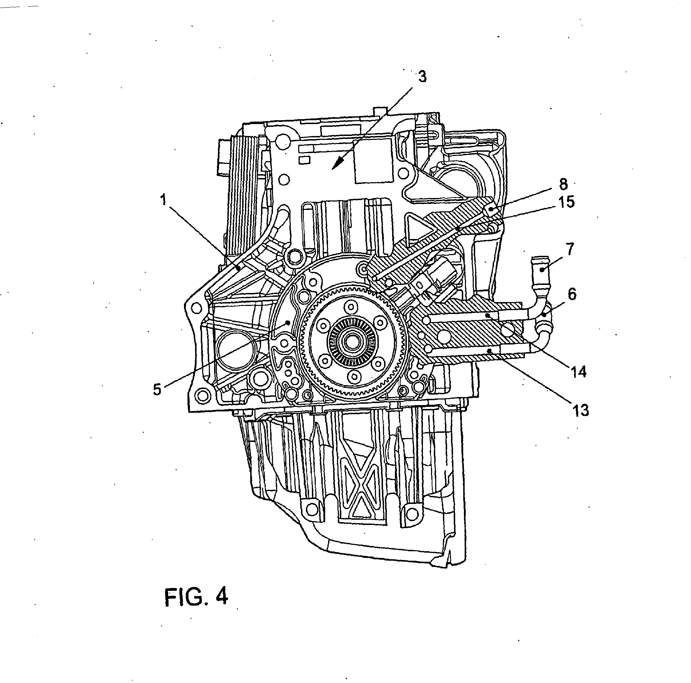

An dem zugänglichen Seitenbereich des Zylinderkurbelgehäuses 1 sind in der Nähe der Stirnfläche 3 mehrere Übergabeanschlüsse 6, 7 und 8 vorgesehen, die in entsprechende Fluidkanäle innerhalb des Zylinderkurbelgehäuses 1 übergehen, die nachfolgend unter Bezug auf Figur 4 detaillierter beschrieben werden. An den frei zugänglichen Übergabeanschlüssen 6, 7, und 8 können geeignete Fluidleitungen (nicht dargestellt) befestigt werden, um einen Vorlauf und/oder einen Rücklauf verschiedener Fluide zu ermöglichen.

Die in der Figur 2 gezeigte Anordnung entspricht im Wesentlichen der Darstellung der Figur 1 mit dem Unterschied, dass die elektrische Maschine 4 und das Dichtflanschgehäuse nicht abgebildet sind, welches im montierten Zustand der Figur 1 den Dichtflansch 5 abdeckt. In der Figur 2 ist somit der Dichtflansch 5 zu erkennen, der zwischen dem Zylinderkurbelgehäuse 1 und der elektrischen Maschine 4 eingefügt ist.

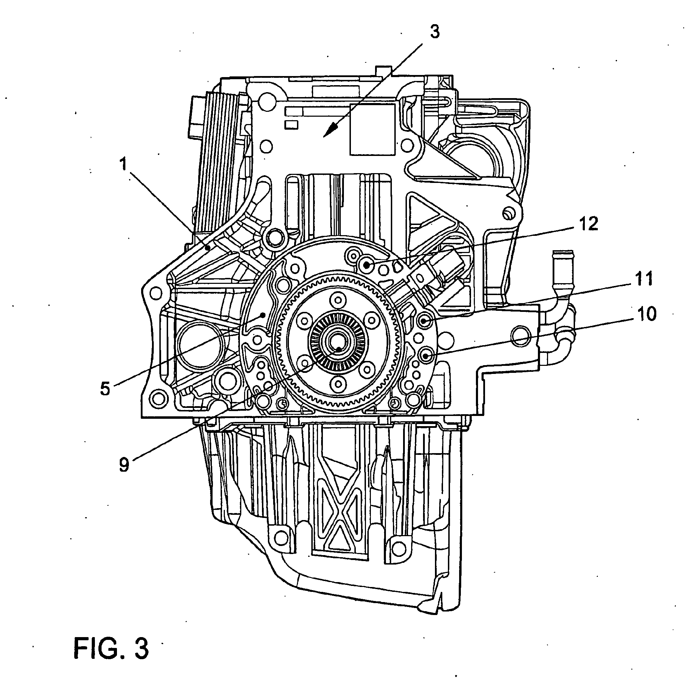

In Figur 3 ist das Zylinderkurbelgehäuse 1 mit dem daran angeordneten Dichtflansch 5 in einer Ansicht von Vorne gezeigt, d.h. mit Blick auf die Stirnfläche 3. Im Zentrum des Dichtflansches 5 ist ein Wellenlager 9 zur Durchführung der Kurbelwelle vorgesehen. Der Dichtflansch 5 dient zum Abdichten des Zylinderkurbelgehäuses 1 an der herausragenden Kurbelwelle, damit das in dem Zylinderkurbelgehäuse 1 vorhandene Öl nicht an dem Wellenlager 9 austritt.

Weiterhin sind in der Figur 3 in dem Dichtflansch 5 vorgesehene zusätzliche Bohrungen 10, 11 und 12 zu erkennen, die mit entsprechenden Fluidkanälen innerhalb des Zylinderkurbelgehäuse 1 in Kontakt stehen. Die Positionen der zusätzlichen Bohrungen 10, 11, 12 korrespondieren im montierten Zustand des Dichtflansches 5 zu den ersten Übergabeanschlüssen der Fluidkanäle in dem Zylinderkurbelgehäuse 1. In der in den vorliegenden Figuren dargestellten Ausführungsform dienen die Bohrungen 10 und 11 zur Durch- und Weiterleitung von Kühlflüssigkeit durch den Dichtflansch 5 zur elektrischen Maschine 4 als Vor- bzw. Rücklauf eines Kühlkreislaufes, beispielsweise eines Niedertemperatur-Kühlkreislauf. Die zusätzliche Bohrung 12 dient hierbei zur Durchleitung eines Hydraulikfluids bzw. Steueröls an die elektrische Maschine 4 und/oder über die elektrische Maschine 4 zu dem Getriebe.

Anhand der Figur 4 wird die zu den ersten Übergabeanschlüssen korrespondierende Positionierung der Bohrungen 10, 11 und 12 in dem Dichtflansch 5 verdeutlicht, indem in dem Bereich dieser Bohrungen eine Teilschnittdarstellung des hinter dem Dichtflansch 5 befindlichen Zylinderkurbelgehäuse 1 gezeigt ist. So führt die Bohrung 10 (Figur 3) zu einem Kanal 13, der an der Seite des Zylinderkurbelgehäuses 1 mit dem zweiten Übergabeanschluss 6 verbunden ist. Parallel und oberhalb des Kanals 13 ist ein weiterer Kanal 14 vorgesehen, der von der Bohrung 11 (Figur 3) und dem zu dieser korrespondierenden ersten Übergabeanschluss zu dem zweiten Übergabeanschluss 7 an der Seite des Zylinderkurbelgehäuses 1 führt. Die Kanäle 13 und 14 dienen in dem beschriebenen Ausführungsbeispiel als Vor- bzw. Rücklauf des Kühlkreislaufes für die elektrische Maschine und/oder deren elektronischen Bauteile.

Schließlich ist von der Position der Bohrung 12 (Figur3) und dem hierzu korrespondierenden ersten Übergabeanschluss noch ein weiterer Kanal 15 in das Zylinderkurbelgehäuse 1 zu dem entsprechenden zweiten Übergabeanschluss 8 an der Seite eingebracht, durch den ein Hydraulikfluid bzw. ein Steuerungsöl zur elektrischen Maschine 4 und gegebenenfalls noch weiter zu einem im Anschluss daran vorgesehenen Getriebe geleitet werden kann.

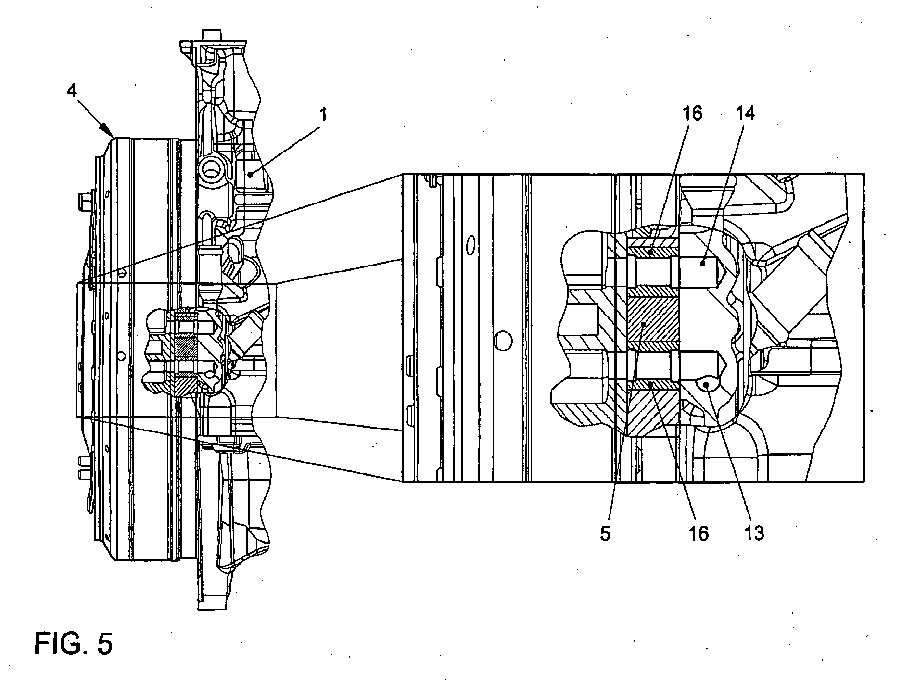

In der Figur 5 wird ein Ausschnitt des Dichtflansches 5 zwischen dem Zylinderkurbelgehäuse 1 und der elektrischen Maschine 4 vergrößert und detaillierter wiedergegeben. Zur Abdichtung der Fluidführung zwischen den angrenzenden Bauteilen, d.h. zwischen dem Zylinderkurbelgehäuse 1 und der elektrischen Maschine 4 ist in den Bohrungen 10, 11 und/oder 12 des Dichtflansches 5 jeweils ein doppelseitig und axial wirkendes Abdichtelement 16 eingefügt, die bevorzugt montagefreundlich und verliersicher vormontiert sein können. Das Abdichtelement 16 kann beispielsweise aus einem Gummimaterial mit einer einvulkanisierten Metallhülse hergestellt sein. Derartige Abdichtelemente 16 zeichnen sich durch eine kostengünstige Bearbeitung des Dichtungssitzes und ein hohes Toleranzausgleichspotential aus.

### Bezugszeichenliste

- 1: Zylinderkurbelgehäuse
- 2: Zylinderbohrungen
- 3: Stirnfläche
- 4: elektrische Maschine
- 5: Dichtflansch
- 6, 7: Übergabeanschlüsse Kühlfluid
- 8: Übergabeanschluss Hydraulikfluid
- 9: Wellenlager
- 10, 11, 12: zusätzliche Bohrungen
- 13, 14: Kanäle Kühlfluid
- 15: Kanal Hydraulikfluid
- 16: Abdichtelement

## Patentansprüche

1. Hybridantriebseinheit für ein Kraftfahrzeug mit einer Brennkraftmaschine mit einem Zylinderkurbelgehäuse (1), mindestens einer wahlweise motorisch oder generatorisch betreibbaren elektrischen Maschine (4), die an dem Zylinderkurbeigehäuse (1) angeordnet ist, und einem Fluidkreislauf zum Durchleiten eines Fluids durch die elektrische Maschine (4), wobei in dem Zylinderkurbelgehäuse (1) mindestens ein Kanal (13, 14, 15) zum Durchleiten des Fluids vorgesehen ist, der einen ersten Übergabeanschluss in einem Bereich des Zylinderkurbelgehäuses (1), an dem die elektrische Maschine (4) angeordnet ist, aufweist,
**dadurch gekennzeichnet,**
**dass** der Kanal (13, 14, 15) einen zweiten Übergabeanschluss (6, 7, 8) in einem von außerhalb zugänglichen Bereich des Zylinderkurbelgehäuses (1) aufweist, wobei Bohrungen (10, 11) vorgesehen sind, die mit entsprechenden Kanälen (13, 14) innerhalb des Zylinderkurbelgehäuses (1) in Kontakt stehen und die zur Durch- und Weiterleitung von Kühlflüssigkeit durch den Dichtflansch (5) zu der elektrischen Maschine (4) als Vor- bzw. Rücklauf eines Kühlkreislaufs dienen.

2. Hybridantriebseinheit nach Anspruch 1, **dadurch gekennzeichnet, dass** die elektrische Maschine (4) nach Art eines Außenläufers ausgebildet ist, die einen Rotor mit einem Nabenkörper und einen Stator aufweist.

3. Hybridantriebseinheit nach Anspruch 1 oder 2, **dadurch gekennzeichnet, dass** zwischen dem Zylinderkurbelgehäuse (1) und der elektrischen Maschine (4) ein Dichtflansch (5) angeordnet ist, der zumindest eine zusätzliche Bohrung (10, 11, 12) aufweist, die in Übereinstimmung mit dem ersten Übergabeanschluss positioniert ist.

4. Hybridantriebseinheit nach Anspruch 3, **dadurch gekennzeichnet, dass** in der mindestens einen zusätzlichen Bohrung (10, 11, 12) ein Abdichtelement (16) eingesetzt ist und der Dichtflansch (5) mit dem Abdichtelement (16) eine vorgefertigte Baueinheit bildet.

5. Hybridantriebseinheit nach einem der vorstehenden Ansprüche, **dadurch gekennzeichnet, dass** ein Kanal (15) für ein Hydraulikfluid vorgesehen ist.

## Claims

1. Hybrid drive unit for a motor vehicle having an internal combustion engine with a cylinder crankcase (1), at least one electrical machine (4) which can be operated selectively as a motor or as a generator and which is arranged on the cylinder crankcase (1), and having a fluid circuit for conducting a fluid through the electrical machine (4), with at least one channel (13, 14, 15) for conducting the fluid being provided in the cylinder crankcase (1), the said channel having a first delivery connection in a region of the cylinder crankcase (1) on which the electrical machine (4) is arranged,
**characterized**
**in that** the channel (13, 14, 15) has a second delivery connection (6, 7, 8) in a region of the cylinder
crankcase (1) which is accessible from the outside, with holes (10, 11) being provided, the said holes being in contact with corresponding channels (13, 14) within the cylinder crankcase (1) and the said holes serving as a feed or return of a cooling circuit in order to conduct and forward cooling liquid through the sealing flange (5) to the electrical machine (4).

2. Hybrid drive unit according to Claim 1, **characterized in that** the electrical machine (4) is in the form of an external rotor which has a rotor with a hub body and a stator.

3. Hybrid drive unit according to Claim 1 or 2, **characterized in that** a sealing flange (5) is arranged between the cylinder crankcase (1) and the electrical machine (4), the said sealing flange having at least one additional hole (10, 11, 12) which is positioned in line with the first delivery connection.

4. Hybrid drive unit according to Claim 3, **characterized in that** a sealing element (16) is inserted into the at least one additional hole (10, 11, 12), and the sealing flange (5) forms a prefabricated structural unit with the sealing element (16).

5. Hybrid drive unit according to one of the preceding claims, **characterized in that** a channel (15) for hydraulic fluid is provided.

## Revendications

1. Unité d'entraînement hybride pour un véhicule automobile comprenant un moteur à combustion interne avec un carter-cylindres (1), au moins une machine électrique (4) pouvant fonctionner au choix comme moteur ou générateur, qui est disposée au niveau du carter-cylindres (1), et un circuit de fluide servant à guider un fluide à travers la machine électrique (4), au moins un canal (13, 14, 15) étant prévu dans le carter-cylindres (1) pour guider le fluide, lequel présente un premier raccord de transfert dans une région du carter-cylindres (1), sur laquelle est disposée la machine électrique (4),
**caractérisée en ce que**
le canal (13, 14, 15) présente un deuxième raccord de transfert (6, 7, 8) dans une région du carter-cylindres (1) accessible depuis l'extérieur, des alésages (10, 11) étant prévus, lesquels sont en contact avec des canaux correspondants (13, 14) à l'intérieur du carter-cylindres (1) et servent au passage et au transfert de liquide de refroidissement à travers la bride d'étanchéité (5) jusqu'à la machine électrique (4) en tant que circuit aller, respectivement retour, d'un circuit de refroidissement.

2. Unité d'entraînement hybride selon la revendication 1, **caractérisée en ce que** la machine électrique (4) est réalisée à la manière d'un induit extérieur qui présente un rotor avec un corps de moyeu et un stator.

3. Unité d'entraînement hybride selon la revendication 1 ou 2, **caractérisée en ce qu'**entre le carter-cylindres (1) et la machine électrique (4) est disposée une bride d'étanchéité (5) qui présente au moins un alésage supplémentaire (10, 11, 12) qui est positionné en coïncidence avec le premier raccord de transfert.

4. Unité d'entraînement hybride selon la revendication 3; **caractérisée en ce que** dans l'au moins un alésage supplémentaire (10, 11, 12) est inséré un élément d'étanchéité (16) et la bride d'étanchéité (5) forme avec l'élément d'étanchéité (16) une unité constructive préfabriquée.

5. Unité d'entraînement hybride selon l'une quelconque des revendications précédentes, **caractérisée en ce qu'**un canal (15) pour un fluide hydraulique est prévu.
